# EUROPÄISCHE PATENTSCHRIFT

(11) **EP 1 320 962 B1**
(45) Veröffentlichungstag und Bekanntmachung des Hinweises auf die Patenterteilung: **20.12.2006**
(21) Anmeldenummer: 01978110.3
(22) Anmeldetag: 11.09.2001
(51) Int. Cl.: H04L 12/28, H04L 29/06, H04L 29/12, H04L 9/32, H04L 9/08

(54) **VERFAHREN ZUR STEUERUNG DES ZUGRIFFS**
METHOD FOR CONTROLLING ACCESS
PROCEDE DE COMMANDE D'ACCES

(30) Priorität: 16.09.2000 DE 10045975
(43) Veröffentlichungstag der Anmeldung: 25.06.2003
(73) Patentinhaber: ROBERT BOSCH GMBH, 70442 Stuttgart (DE)
(72) Erfinder: VOLLMER, Vasco, 31188 Holle (DE); HOFMANN, Matthias, 01705 Freital (DE)
(86) Internationale Anmeldenummer: PCT/DE2001/003474
(87) Internationale Veröffentlichungsnummer: WO 2002/023801

(56) Entgegenhaltungen:
- EP-A- 0 924 900
- EP-A- 0 939 519
- WO-A-98/26548
- US-A- 6 070 243

## Beschreibung

### Stand der Technik

Die Erfindung geht aus von einem Verfahren zur Steuerung des Zugriffs auf Elemente innerhalb eines Bussystems oder Netzes.

Aus dem IEEE Standard 1394[1] ist ein serielles Bussystem bekannt, bei dem verschiedene Endgeräte (Knoten) entweder über ein 4-6-adriges Kabel oder einen Lichtwellenleiter angeschlossen werden. Mindestens ein Knoten kann dabei in der Art ausgeführt sein, dass er zusätzliche Verwaltungsfunktionen für das Netzwerk übernehmen kann (Busmanagement).

Neben obigem Standard gibt es eine busunabhängige Erweiterung, die unter dem Namen HAVi (Home Audio Video interoperability)[2] spezifiziert ist. Diese HAVi-Spezifikation beschreibt insbesondere die Fern-Kontrolle von Geräten unter Verwendung eines Ressourcen-Managers, der eine Ressource (Gerät) auf Anforderung belegt und sie auch wieder freigibt.

In der HAVi-Spezifikation wir ein verteiltes Modell beschrieben, bei dem die Steuerung der Geräte über Kontrollmodule, sogenannte "Device Control Modules (DCM)", vorgenommen wird. Diese DCM laufen als Softwareelement auf dem Gerät, das Kontrollfunktionen auf einem anderen Gerät ausführen will. Dabei ist ein DCM jeweils spezifisch für ein bestimmtes Gerät oder eine Geräteklasse.

Der HAVi-Standard bietet die Möglichkeit, einem Softwareelement zwei verschiedene Sicherheitsstufen zuzuweisen. Dabei wird ein Softwamelement als "trusted" bezeichnet, wenn dieses vom Hersteller ausreichend getestet wurde. Bei Softwareelementen, die dynamisch in das System geladen werden, muss über eine digitale Signatur die Authentizität des Softwareelements nachgewiesen werden. Alle DCMs müssen den Status "trusted" haben. Als "untrusted" werden diejenigen Softwareelemente bezeichnet, die vom Hersteller nicht als "trusted" markiert wurden. Auf Basis dieser Einstufung entscheidet der Empfänger einer Anforderung, ob er dem sendenden Softwareelement vertraut das heißt auch ein "untrusted" Softwareelement kann Anforderungen senden, es ist jedoch nicht sicher, ob diese Anforderung erfüllt wird.

Aus der EP-A-0 924 900 ist ein Bussystem bekannt, bei dem sich Geräte, die mit dem Bussystem in Verbindung treten möchten, über eine gerätespezifische Kennung identifizieren. Nach einer Authentifizierung wird einem Gerät mitgeteilt, dass es berechtigt ist, innerhalb eines VLAN-Netzes zu kommunizieren.

Bei der US-A-6 070 243 identifizieren sich Geräte für den Buszugriff ebenfalls mit einer Kennung. Über eine Berechtigungsliste wird eine Ressourcenauswahl getroffen, die über mehrere Kommunikationsinstanzen läuft.

### Vorteile der Erfindung

Die erfindung wird durch das Verfahren des Anspruchs 1 bestimmt. Mit den Maßnahmen des Anspruchs 1 ist eine Sicherheitsfunktion gewährleistet, die insbesondere für den Einsatz in heterogenen Netzen, z. B. im Kraftfahrzeug, eine weitergehende Sicherheit gewährleistet als sie mit dem HAVi-Standard zu erreichen ist. Insbesondere eignet sich die Erfindung bei der Kommunikation zwischen und mit Softwareelementen über verschiedene Bus- und/oder Netzwerktechnologien. Es wird eine eindeutige Identifikation von Geräten, beziehungsweise Softwareelementen innerhalb eines Netzes erreicht, das beispielsweise nach dem HAVi-Standard arbeitet. Ein Gerät oder Softwareelement wird anhand einer gerätespezifischen Kennung als Gerät einer bestimmten Klasse erkannt. Die Authentizität eines Gerätes beziehungsweise Softwareelementes wird anhand eines digitalen Schlüssels festgestellt. Nach der Authentifizierung wird dem Gerät ein Zugriff entsprechend seiner Klassenzugehörigkeit auf Elemente des Bussystems oder Netzes gewährt. Die Authentisierung wird dazu benutzt festzustellen, welche Ressourcen des Bussystems oder Netzes ein externes Gerät auf welche Art und Weise kontrollieren darf. Ein unberechtigter Zugriff von einem anderen Netz wird durch eine Firewallfunktionalität verhindert.

In den Unteransprüchen sind vorteilhafte Ausgestaltungen aufgezeigt.

Es ist von Vorteil, dass sich das externe Gerät für den Zugriff bei einem Gateway mittels einer Anmeldenachricht anmeldet, welche insbesondere zusammen mit der Gerätekennung zum Bus- oder Netzmanager übertragen wird.

Wird neben der gerätespezifischen Kennung auch eine Geräteklassenkennung übertragen, kann anhand derer der Zugriff gesteuert werden.

Durch eine gemeinsame Schlüsselvereinbarung insbesondere unter Verwendung des Diffie-Hellman Key-Exchange kann ein Dritter diesen Schlüssel nicht ermitteln.

Es ist von Vorteil nach der gemeinsamen Schlüsselvereinbarung eine Authentisierung nach dem Challenge-Response-Verfahren durchzuführen.

Es können sowohl Signalumsetzungen nach dem ISO/OSI-Schichtenmodell in der Physical-Layer wie auch in höheren Schichten, z. B. Adressumsetzungen, durchgeführt werden.

Die Freigabe oder Sperrung kann vorteilhaft aufgrund der Quell- oder Zieladresse eines Datenpaketes vorgenommen werden.

Die Firewallfunktionalität kann entsprechend der ermittelten Zugriffsberechtigung, bestimmte Kommandos eines externen Gerätes filtern.

Vor einer festen Zuweisen der Zugriffsberechtigung durch den Bus-oder Netzmanager, kann die Zugriffs berechtigung ausgehandelt werden.

Ein ganzes externes Bussystem oder Netz kann eine Kommunikationsverbindung aufnehmen, um einen Zugriff auf Elemente des Bussystems oder Netzes zu erhalten.

### Zeichnungen

Anhand der Zeichnungen werden Ausführungsbeispiele der Erfindung erläutert. Es zeigen
Figur 1 die Netztopologie eines Bussystems,
Figur 2 verschiedene Netzelemente,
Figur 3 die Authentisierung am Busmanager.

### Beschreibung von Ausführungsbeispielen

Die Erfindung wird anhand des seriellen Bussystems gemäss dem IEEE Standard 1394 [1] erläutert, wobei auch auf die Erweiterung gemäss HAVi-Spezifikation [2] Bezug genommen wird. Vor der eigentlichen Erläuterung der Erfindung wird zum besseren Verständnis auf den IEEE Standard 1394 und die HAVi-Spezifikation eingegangen. Außerdem werden einige Begriffe zum Verständnis erläutert.

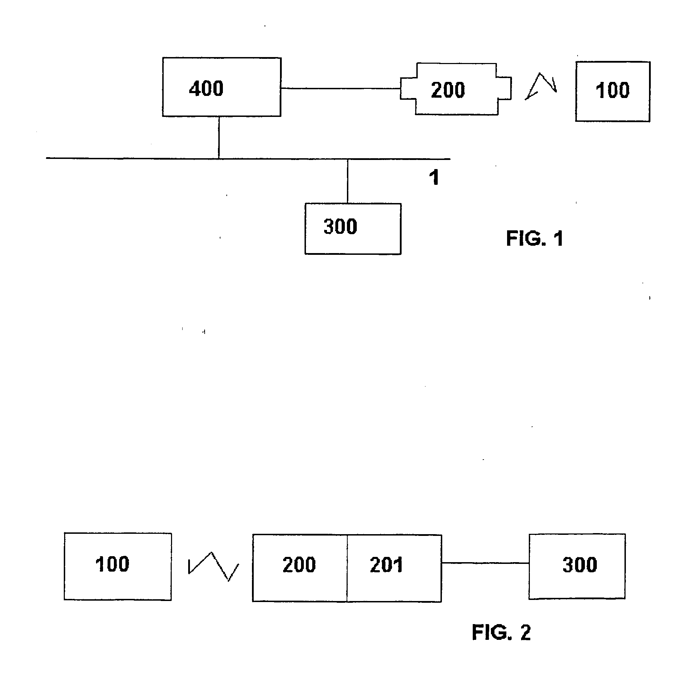

Die verschiedenen Endgeräte (Knoten) sind nach Figur 1 entweder über ein 4-6-adriges Kabel oder einen Lichtwellenleiter 1 angeschlossen. Dabei kann ein Knoten wahlweise als Endstück (Blatt) 200 oder als Relaisknoten (Zweig) 300, 400 ausgeführt sein. Der oberste Knoten wird als Wurzel bezeichnet. Durch den Einsatz der verschiedenen Knotentypen kann eine geeignete Topologie des Netzes aufgebaut werden. Ein Blatt empfängt dabei Informationspakete und verarbeitet sie, falls die ZielAdresse des Paketes mit der eigenen übereinstimmt. Ein Zweig muss zusätzlich alle Pakete, die er auf einem Port empfängt auf allen anderen Ports aussenden.

IEEE 1394 sieht vor, dass das Netzwerk selbstkonfigurierend ist, d. h. nach dem Einschalten oder nach einem Reset senden alle Knoten einige ausgewählte Informationen über sich selbst ins Netz. Diese Information wird dabei von allen Knoten empfangen. Ein Knoten kann dabei in der Art ausgeführt sein, dass er zusätzliche Verwaltungsfunktionen für das Netzwerk übernehmen kann (Busmanagement). Dazu sammelt er alle Informationen der anderen Knoten, verarbeitet sie und speichert sie intern geeignet ab. Sollten mehrere Knoten Busmanagementfähigkeiten besitzen, gibt es ein Konkurrenzverfahren, aus dem ein Knoten als Sieger hervorgeht; der dann das Busmanagement übernimmt.

Neben den Verfahren, wie sie in den Spezifikationen zu IEEE 1394 beschrieben sind, gibt es die busunabhängige Erweiterung HAVi, die für den Einsatz in einem IEEE 1394-Netzwerk geeignet ist. Insbesondere die Fern-Kontrolle von Geräten von jedem anderen Punkt im Netzwerk wird in der HAVi-Spezifikation beschrieben. Dazu ist ein verteiltes Modell beschrieben, bei dem die Steuerung der Geräte über Kontrollmodule, sogenannte "Device Control Modules (DCM)", vorgenommen wird. Diese DCM laufen als Softwareelement auf dem Gerät, das Kontrollfunktionen auf einem anderen Gerät ausführen will. Dabei ist ein DCM jeweils spezifisch für ein bestimmtes Gerät oder eine Geräteklasse. Eine weitere Gruppe von Softwareelementen stellen die "Functional Component Modules" dar, von denen jeweils mehrere hierarchisch unterhalb eines DCM angeordnet werden können und die für die Kontrolle jeweils eines spezifischen funktionalen Teils eines Gerätes zuständig sind.

Ein Gateway dient der Verbindung zweier Netzwerke untereinander. Dabei wird unterschieden, auf welchem Netzwerklayer (vgl. ISO/OSI-Schichtenmodell) diese Verbindung vorgenommen wird. So ist ein Gateway, welches nur den ersten (physical-Layer) umfaßt, im Wesentlichen nur ein Umsetzer von physikalischen Gegebenheiten, z. B. ein elektro-optischer Wandler, hier werden die eigentlichen Daten nicht verändert. Ein Gateway, das auch höhere Schichten beinhaltet, wertet zusätzlich bestimmte Datenfelder aus und verändert diese gegebenenfalls entsprechend den Erfordernissen des Zielsystems, z. B. kann eine Adressumsetzung der Ziel- und Quelladresse vorgenommen werden, wenn die beiden verbundenen Netze unterschiedliche. Adressierungsschemata verwenden.

Eine Firewall dient der Absicherung eines Netzes gegen einen unberechtigten Zugriff von einem anderen Netz aus, z. B. von einem Teilnetz aus auf ein anderes Teilnetz.

Bei einer Authentisierung führt ein Kommunikationsteilnehmer einem anderen Kommunikationsteilnehmer gegenüber den Nachweis seiner Identität.

Der Globally Unique Identifier (GUID).ist eine im IEEE 1394-Standard festgelegte Nummer, die aus einer 24 Bit langen Herstellerkennung und einer 40 Bit langen, vom Hersteller wählbaren Zahl besteht. Die Herstellerkennung wird dabei von der IEEE auf Anfrage eindeutig zugewiesen. Die GUID wird fest in ein IEEE-1394 konformes Gerät gespeichert und identifiziert dieses eindeutig.

Die Model ID ist ein 24 Bit langes Datenfeld, mit dem der Hersteller eines Gerätes die Zugehörigkeit zu einer bestimmten Geräteklasse oder -Familie kennzeichnen kann.

Das erfindungsgemäße Verfahren dient dazu, die Authentisierung eines Gerätes durchzuführen, das beispielsweise an ein Fahrzeugnetzwerk angeschlossen wird. Dabei wird im Allgemeinen ein internes Netz mit einem über ein Gateway bereitgestellten externen Anschluß vorgesehen. Dieser Anschluß wird in der Folge als Anwender-Port bezeichnet. Das Gateway ist notwendig, um einerseits die physikalische Umsetzung vorzunehmen, d. h. beispielsweise eine Umsetzung von einem internen Lichtwellenleiter auf einen externen elektrischen oder drahtlosen Anschluß und andererseits gegebenenfalls eine Protokollumsetzung durchzuführen. Außerdem ist unter Umständen die Integration einer Firewall gewünscht, um die Sicherheit des internen Netzes zu gewährleisten.

Da an den Anwender-Anschluß auch Geräte angeschlossen werden können, die sensitive Daten mit dem internen Netz austauschen, z. B. ein Werkstattdiagnosegerät, ist es notwendig, eine sichere Authentisierung einerseits des angeschlossenen Gerätes, aber auch des Netzes durchzuführen. Das erfindungsgemäße Verfahren verwendet dabei einen Mechanismus zum sicheren Austausch eines Schlüssels, der als Diffie-Hellmann Key-Exchange bekannt ist (siehe [3], Kapitel 7.1.5.2). Außerdem wird eine Authentisierungsprozedur verwendet, die als Challenge-Response Verfahren bekannt ist ([3], Kapitel 7.1.5.1).

Angenommen werden drei beteiligte Instanzen (Figur 2). Das externe Gerät 100 wird an den Anwender-Anschluß angeschlossen. Dieser ist wiederum über das Gateway 200 an das interne Netzwerk 1 des Fahrzeugs angeschlossen. In diesem Netzwerk dient der Busmaster, beziehungsweise Busmanager oder Netzmanager 300 als eine zentrale Kontrollinstanz, die insbesondere auch die Authentizität angeschlossener Geräte überwacht.

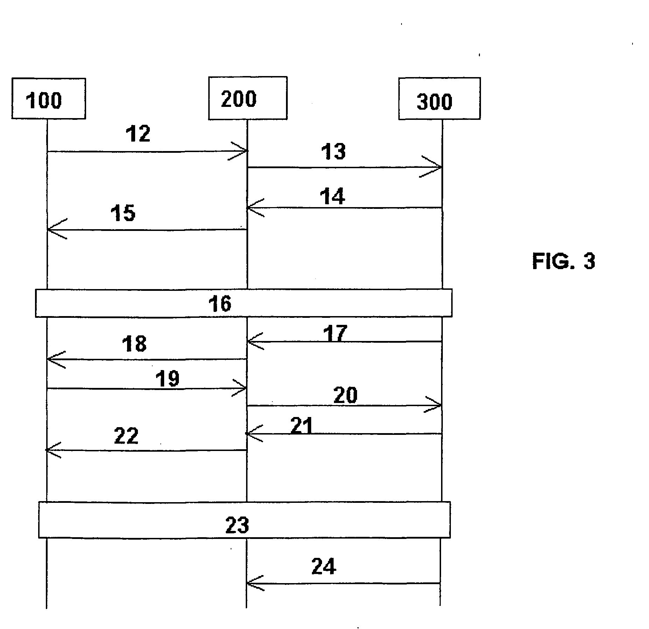

Nach dem Anschließen des externen Gerätes 100, meldet sich dieses beim Gateway 200 an. Mit dieser Anmeldenachricht 12 (Figur 3) überträgt das Gerät 100 seine GUID und vorteilhafter Weise auch seine Model ID. Außerdem beinhaltet die Nachricht auch eine Primzahl n, für die gilt: (n-1)/2 ist ebenfalls eine Primzahl und eine Primzahl g. Außerdem wählt das Gerät intern eine Zufallszahl x. Zusätzlich zu n und g wird noch das Ergebnis der Operation (g^{x} mod n) an das Gateway 200 übertragen. Das Gateway übernimmt alle diese Parameter und sendet sie an den internen Busmanager 300 weiter (13). Der Busmanager 300 wählt nun seinerseits eine Zufallszahl y und berechnet auf Basis der vom Gerät 100 übertragenen Werte das Ergebnis der Operation (gY mod n). Dieses Ergebnis wird an das Gateway (14) und von dort an das Gerät 100 übermittelt (15). Mit Hilfe der Ergebnisse der beiden Operationen können nun sowohl das externe Gerät 100 und der Busmanager 300 das Ergebnis der Operation K_{EB} = (g^{xy} mod n) berechnen. Dieses Ergebnis K_{EB} dient in der Folge als gemeinsamer Schlüssel (16) für die folgende Authentisierung. Diese Möglichkeit, einen gemeinsamen Schlüssel zu bestimmen, ohne dass ein Dritter diesen ermitteln kann, wird als Diffie-Hellmann Key-Exchange bezeichnet.

Nachdem ein gemeinsamer Schlüssel (16) sowohl im externen Gerät 100 als auch im Busmanager 300 existiert, wird die Authentisierung nach dem Challenge-Response Verfahren durchgeführt. Dabei generiert der Busmanager 300 eine Zufallszahl R_{B} (die sogenannte Challenge) und sendet (17, 18) diese an das externe Gerät 100. Das externe Gerät 100 verschlüsselt die Challenge mit dem gemeinsamen Schlüssel K_{EB} und sendet das Ergebnis (19) über das Gateway 200 zurück (20) an den Busmanager (sogenannter Response). Außerdem enthält diese Nachricht eine Zufallszahl R_{E}, die als Challenge dem Busmanager gesendet wird. Der überprüft jetzt, ob die Zufallszahl R_{B} mit dem korrekten Schlüssel K_{EB} verschlüsselt wurde. Nach der Verifikation verschlüsselt der Busmanager die Challenge R_{E} ebenfalls mit dem Schlüssel K_{EB} und sendet das Ergebnis (21, 22) an das externe Gerät 100. Dieses überprüft seinerseits die Richtigkeit des Ergebnisses. Wenn beide Überprüfungen ein korrektes Ergebnis geliefert haben, haben sich beide Kommunikationspartner (Gerät 100 und Busmanager 300) authentifiziert. Der Busmanager kann jetzt aufgrund der in der GUID enthaltenen Herstellerkennung, anhand der in der GUID enthaltenen Seriennummer oder besonders vorteilhaft der Model ID den Zugriff auf bestimmte Ressourcen des Netzes erlauben oder auch sperren.

Besonders vorteilhaft beinhaltet ein Gateway 200 neben der Umsetzung von physikalischen Gegebenheiten und/oder Protokollen auch eine Firewallfunktionalität 201. Dabei wird in besonders vorteilhafter Weise das zuvor beschriebene Verfahren zur Authentisierung genutzt, um festzustellen, welche Ressourcen ein externes Gerät auf welche Art und Weise verwenden und/oder kontrollieren darf.

Der Busmanager 300 erkennt aufgrund der in der GUID enthaltenen Herstellerkennung (Vendor ID) und/oder der Seriennummer und/oder der zusätzlichen Model ID um welchen Gerätetyp, beziehungsweise auch um welches Gerät es sich bei dem externen Gerät handelt. Nach einem internen Verfahren legt der Busmanager 300 die Zugriffsberechtigungen auf die Netzelemente für dieses Gerät 100 fest. Aufgrund dieser ermittelten Zugriffsberechtigungen konfiguriert (24) der Busmanager 300 das Firewall-Modul 201 innerhalb des Gateways 200 so, dass dieses entsprechend der festgelegten Berechtigungen sperrt oder öffnet. Dabei können die Berechtigungen aufgrund der Quelladresse, d. h. der Herkunftsadresse eines Datenpaketes oder aufgrund der Zieladresse eines Datenpaketes eingestellt werden. Möglich, aber aufwendiger ist eine Filterung bestimmter Kommandos. Dabei muss die Firewall ein Datenpaket jedoch sehr detailliert auswerten.

Im Ausführungsbeispiel gemäss Figur 2 ist ein externes Gerät 100 über eine Funkschnittstelle an ein Gateway 200 mit dem fahrzeuginternen Netzwerk 1 verbunden. Im fahrzeuginternen Netzwerk befindet sich mindestens ein als Busmanager (Busmaster) ausgezeichnetes Gerät 300 und ein weiteres Gerät 400.

In diesem Beispiel wird angenommen, dass es sich bei dem externen Gerät um ein Werkstattdiagnosegerät handelt. Dieses Diagnosegerät beinhaltet eine Funktion, mit der es möglich ist, eine Kommunikation auf dem fahrzeuginternen Gerät 400 durchzuführen und auf diesem Gerät, z. B. eine zentrale Steuereinheit, Einstellung auszulesen und zu verändern. Da diese Veränderungen bei einer fehlerhaften Bedienung Einfluß auf die Funktion des Gerätes oder des Fahrzeuges haben können, ist für den Zugriff auf diese Steuereinheit eine Authentifizierung vorgesehen, d. h. das Diagnosegerät erhält nur Zugriff auf die Steuereinheit, wenn sich das Gerät und/oder der Anwender gegenüber dem Busmanager 300 authentifiziert. Dazu tauschen das Diagnosegerät und der Busmanager zunächst einen Schlüsselsatz aus, um die nachfolgende Authentifizierung durchführen zu können. Anschließend wird eine Authentifizierung durchgeführt. Nach der erfolgreichen Authentifizierung entscheidet der Busmanager, welche Art von Zugriff das Diagnosegerät auf die Elemente des fahrzeuginternen Netzwerkes erhält und konfiguriert das Firewall-Modul 201 innerhalb des Gateways 200 entsprechend. In diesem Beispiel erkennt der Busmanager ein autorisiertes Diagnosegerät des Fahrzeugherstellers und gibt vollen Zugriff auf alle Geräte des Netzwerkes frei. Damit kann jetzt beispielsweise eine Aktualisierung von Betriebs- oder Anwendungssoftware oder eine Fehlerdiagnose des Systems durchgeführt werden.

In einem weiteren Ausführungsbeispiel nach Figur 1 ist das extern angeschlossene Gerät diesmal kein autorisiertes Diagnosegerät, sondern ein Handheld-Computer, mit dem ein Anwender Informationen zu einem im Fahrzeug installierten Gerät, z. B. Navigationsgerät 400, übertragen möchte. Nach der Authentifizierungsprozedur schaltet der Busmanager 300 im Firewall-Modul 201 für das externe Gerät 100 nur den Zugriff auf das Navigationsgerät 400 mit den für den Datenaustausch benötigten Steuerbefehlen frei. Ein Zugriff auf andere Geräte oder anderen Befehlen ist im externen Gerät nicht möglich, da diese vom Firewall-Modul blockiert werden.

Alternativ können die Zugangsberechtigungen zwischen dem Busmanager 300 und dem externen Gerät 100 verhandelt werden.

Dabei kann das externe Gerät bestimmte Zugriffsberechtigungen anfordern, die der Busmanager dann gewähren oder ablehnen kann.

An das Gateway 200 kann auch ein externes Netzwerk angeschlossen werden, das mit dem Netzwerk in Kommunikationsverbindung treten möchte. Die Prozeduren der Identifikation und der Authentifizierung laufen wie zuvor geschildert ab. Das Netzwerk kann natürlich auch mehrere Gateways aufweisen, über die mehrere Geräte oder Netze angeschlossen sind, die zeitlich gestaffelt oder gleichzeitig auf das Bussystem oder Netz zugreifen. Insbesondere bei einem gleichzeitigen Zugriffswunsch auf die gleiche Ressource, gewährt der Busmanager 300 den Zugriff nach zuvor vereinbarten Prioritäten oder durch Verhandlung.

### Literatur

[1] IEEE, "P1394a Draft for a High Performance Serial Bus (Supplement)",
[2] HAVi Organization, "The HAVi Specification 1.0",
[3] Andrew S. Tanenbaum, "Computernetzwerke", Prentice Hall, 1998

## Patentansprüche

1. Verfahren zur Steuerung des Zugriffs auf Elemente innerhalb eines Bussystems oder Netzes mit folgenden Schritten:
- ein externes Gerät (100), das mit dem Bussystem oder Netz in Kommunikationsverbindung treten möchte, identifiziert sich über eine gerätespezifische Kennung bei einem Bus- oder Netzmanager (300), wobei die gerätespezifische Kennung selbst oder ein ihr zugeordneter Datensatz Angaben über die Zugehörigkeit des Gerätes zu einer bestimmten Klasse enthält,
- es wird eine Authentifizierung des externen Gerätes (100) mit einem digitalen Schlüssel vorgenommen, wobei zur Authentifizierung des externen Gerates (100) der Bus- oder Netzmanager (300) eine Zufallszahl an das externe Gerät (100) sendet und das externe Gerät diese Zufallszahl verschlüsselt mit einem zu dem externen Gerät (100) und dem Bus- oder Netzmanager (300) gemeinsamen Schlüssel und das Ergebnis zurück an den Bus- oder Netzmanager (300) sendet,
- nach der Authentifizierung wird dem externen Gerät (100) ein Zugriff entsprechend seiner Klassenzugehörigkeit auf Elemente des Bussystems oder Netzes gewährt,
- das Gateway (200), bei dem sich ein externes Gerät (100) fur einen Zugriff anmeldet, ist eingerichtet, eine Firewallfunktionalität (201) durchzuführen,
- die Authentifizierung wird dazu genutzt, festzustellen, welche Ressourcen des Bussystems oder Netzes das externe Gerät (100) auf welche Art und Weise verwenden und/oder kontrollieren darf,
- der Bus- oder Netzmanager (300) konfiguriert aufgrund der von ihm ermittelten Zugriffsberechtigung die Firewallfunktionalität (201) derart, dass diese entsprechend der ermittelten Zugriffsberechtigung, eine Freigabe oder Sperrung der Ressourcen des Bussystems oder Netzes vornimmt.

2. Verfahren nach Anspruch 1, **dadurch gekennzeichnet, dass** sich das externe Gerät (100) für den Zugriff bei einem Gateway (200) mittels einer Anmeldenachricht anmeldet, welche insbesondere zusammen mit der gerätespezifischen Kennung zum Bus- oder Netzmanager (300) übertragen wird.

3. Verfahren nach Anspruch 2, **dadurch gekennzeichnet, dass** neben der gerätespezifischen Kennung auch eine Geräteklassenkennung übertragen wird.

4. Verfahren nach einem der Ansprüche 1 bis 3, **dadurch gekennzeichnet, dass** eine gemeinsame Schlüsselvereinbarung zwischen dem externen Gerät (100) und dem Bus- oder Netzmanager (300) vorgenommen wird, insbesondere durch den Austausch von Parametern, wie Primzahlen, Zufallszahlen und deren Verknüpfungen.

5. Verfahren nach Anspruch 4, **dadurch gekennzeichnet, dass** zur gemeinsamen Schlüsselvereinbarung das Diffie-Hellmann Verfahren verwendet wird.

6. Verfahren nach einem der Ansprüche 4 oder 5, **dadurch gekennzeichnet, dass** nach der gemeinsamen Schlüsselvereinbarung zwischen dem externen Gerät (100) und dem Bus- oder Netzmanager (300) eine Authentisierung nach dem Challenge-Response Verfahren durchgeführt wird.

7. Verfahren nach einem der Ansprüche 2 bis 6, **dadurch gekennzeichnet, dass** das Gateway (100) eingerichtet ist, Signalumsetzungen nach dem ISO/OSI-Schichtenmodell zumindest in der Physical-Layer und/oder höherer Schichten durchzuführen.

8. Verfahren nach Anspruch 1, **dadurch gekennzeichnet, dass** die Freigabe oder Sperrung aufgrund der Quelladresse oder der Zieladresse eines Datenpaketes vorgenommen wird.

9. Verfahren nach Anspruch 1, **dadurch gekennzeichnet, dass** die Firewallfunktionalität (201) entsprechend der ermittelten Zugriffsberechtigung, bestimmte Kommandos des externen Gerätes (100) filtert.

10. Verfahren nach einem der Ansprüche 1 bis 9, **dadurch gekennzeichnet, dass** die Zugriffsberechtigung zwischen dem externen Gerät (100) und dem Bus- oder Netzmanager (300) ausgehandelt wird.

11. Verfahren nach einem der Ansprüche 1 bis 10, **dadurch gekennzeichnet, dass** ein externes Bussystem oder Netz eine Kommunikationsverbindung mit dem Bussystem oder Netz aufnimmt, um einen Zugriff auf Elemente des Bussystems oder Netzes zu erhalten.

## Claims

1. Method for access control to elements within a bus system or network, having the following steps:
- an external appliance (100) which wishes to set up a communication link with the bus system or network is identified by means of an appliance-specific identification with a bus or network manager (300), with the appliance-specific identification itself or a data record associated with it including details about the association of the appliance with a specific class,
- the external appliance (100) is authenticated by means of a digital key, with the bus or network manager (300) transmitting a random number to the external appliance (100) for authentication of the external appliance (100), and the external appliance transmitting this random number (scrambled by means of a key which is common to the external appliance (100) and to the bus or network manager (300)) and the result back to the bus or network manager (300),
- after authentication, the external appliance (100) is given access to elements of the bus system or network as appropriate for its class association,
- the gateway (200), which an external appliance (100) uses to register its access, is designed to carry out a firewall function (201),
- the authentication is used to confirm the way in which the external appliance (100) may use and/or monitor the resources of the bus system or network,
- the bus or network manager (300) configures the firewall function (201) on the basis of the access authorization determined by it, in such a manner that it enables or inhibits the resources of the bus system or network in accordance with the determined access authorization.

2. Method according to Claim 1, **characterized in that** the external appliance (100) registers for access with a gateway (200) by means of a registration message which, in particular, is transmitted together with the appliance-specific identification to the bus or network manager (300).

3. Method according to Claim 2, **characterized in that** an appliance class identification is also transmitted, as well as the appliance-specific identification.

4. Method according to one of Claims 1 to 3, **characterized in that** a common key agreement is reached between the external appliance (100) and the bus or network manager (300), in particular by interchanging parameters, such as prime numbers, random numbers and their links.

5. Method according to Claim 4, **characterized in that** the Diffie-Hellmann method is used for the common key agreement.

6. Method according to one of Claims 4 or 5, **characterized in that**, once the common key agreement has been reached between the external appliance (100) and the bus or network manager (300), an authentication process is carried out using the challenge-response method.

7. Method according to one of Claims 2 to 6, **characterized in that** the gateway (100) is designed to carry out signal conversion processes, in accordance with the ISO/OSI layer model, at least in the physical layer and/or higher layers.

8. Method according to Claim 1, **characterized in that** the enabling or inhibiting is carried out on the basis of the source address or the destination address of a data packet.

9. Method according to Claim 1, **characterized in that** the firewall function (201) filters specific commands from the external appliance (100) in accordance with the determined access authorization.

10. Method according to one of Claims 1 to 9, **characterized in that** the access authorization is negotiated between the external appliance (100) and the bus or network manager (300).

11. Method according to one of Claims 1 to 10, **characterized in that** an external bus system or network sets up a communication link with the bus system or network in order to obtain access to elements of the bus system or network.

## Revendications

1. Procédé de commande d'accès à des éléments à l'intérieur d'un système bus ou d'un réseau, présentant les étapes suivantes :
- un appareil externe (100) qui pourrait venir en liaison de communication avec le système bus ou le réseau, s'identifie par l'intermédiaire d'une caractérisation spécifique à l'appareil auprès d'un gestionnaire (300) de bus ou de réseau, cette caractérisation spécifique elle-même ou une série de données qui lui est associée contenant des indications concernant l'appartenance de l'appareil à une classe définie,
- une authentification de l'appareil externe (100) est effectuée avec une clé numérique, et pour cette authentification, le gestionnaire (300) de bus ou de réseau envoie un nombre aléatoire à l'appareil externe qui le chiffre au moyen d'une clé commune à l'appareil externe (100) et au gestionnaire (300) et renvoie le résultat à ce dernier,
- après l'authentification, à l'appareil externe (100) est maintenu un accès correspondant à la classe auquel il appartient, aux éléments du système de bus ou du réseau,
- une passerelle (200) dans laquelle s'annonce un appareil externe pour obtenir un accès est conçue pour assurer une fonctionnalité de pare-feu (201),
- l'authentification est utilisée pour déterminer quelles ressources du système de bus ou de réseau et de quelle manière l'appareil externe (100) doit utiliser et/ou contrôler,
- le gestionnaire (300) de bus ou de réseau configure sur la base de l'autorisation d'accès établie par lui, la fonctionnalité de pare-feu (201) de manière que celle-ci effectue, en correspondance avec l'autorisation d'accès établie, une libération ou un blocage des ressources du système de bus ou du réseau.

2. Procédé selon la revendication 1,
**caractérisé en ce que**
l'appareil externe (100), pour obtenir l'accès, s'annonce dans la passerelle (200) par un avis de demande qui est notamment transmis au gestionnaire (300) de bus ou de réseau, avec la caractérisation spécifique à l'appareil.

3. Procédé selon la revendication 2,
**caractérisé en ce qu'**
en plus de la caractérisation spécifique de l'appareil, on transmet également une classification de l'appareil.

4. Procédé selon une des revendications 1 à 3,
**caractérisé en ce qu'**
une spécification de clé commune est réalisée entre l'appareil externe (100) et le gestionnaire (300) de bus ou de réseau, notamment par l'échange de paramètres tels que des nombres premiers, des nombres aléatoires et leurs combinaisons.

5. Procédé selon la revendication 4,
**caractérisé en ce que**
pour obtenir la spécification de clé commune, on utilise le procédé Diffie-Hellmann.

6. Procédé selon la revendication 4 ou 5,
**caractérisé en ce qu'**
après la spécification commune de clé, entre l'appareil externe (100) et le système de gestion (300) de bus ou de réseau on effectue une authentification selon le procédé challenge-response.

7. Procédé selon une des revendications 2 à 6,
**caractérisé en ce que**
la passerelle (200) est conçue pour exécuter des transformations de signaux, selon le modèle à couches ISO/OSI au moins dans la couche physique et/ou dans des couches plus hautes.

8. Procédé selon la revendication 1,
**caractérisé en ce que**
la libération ou le blocage est effectuée sur la base de l'adresse de départ ou de l'adresse de destination d'un paquet de données.

9. Procédé selon la revendication 1,
**caractérisé en ce que**
la fonctionnalité de pare-feu (201) filtre, en correspondance avec l'autorisation d'accès établie, certaines commandes de l'appareil externe (100).

10. Procédé selon une des revendications 1 à 9,
**caractérisé en ce que**
l'autorisation d'accès est négociée entre l'appareil externe (100) et le gestionnaire (300) de bus ou de réseau.

11. Procédé selon une des revendications 1 à 10,
**caractérisé en ce que**
un système de bus ou réseau externe reçoit une communication d'un système de bus ou réseau pour obtenir un accès aux éléments du système de bus ou réseau.
